# EUROPÄISCHE PATENTSCHRIFT

(11) **EP 2 226 513 B1**
(45) Veröffentlichungstag und Bekanntmachung des Hinweises auf die Patenterteilung: **24.10.2012**
(21) Anmeldenummer: 09015529.2
(22) Anmeldetag: 16.12.2009
(51) Int. Cl.: F15B 15/26, B29C 45/67

(54) **Klemmeinheit, insbesondere zur Verwendung als Formschließeinheit**
Clamping unit, in particular for use as a die closing unit
Unité de blocage, notamment pour une unité de fermeture de moule

(30) Priorität: 02.03.2009 DE 102009011003
(43) Veröffentlichungstag der Anmeldung: 08.09.2010
(73) Patentinhaber: SITEMA GmbH & Co. KG, 76135 Karlsruhe (DE)
(72) Erfinder: Back, Gunnar, 76547 Sinzheim (DE)
(74) Vertreter: Lemcke, Brommer & Partner

(56) Entgegenhaltungen:
- WO-A1-00/67987
- DE-A1- 10 350 225
- FR-A1- 2 411 694
- JAMALY F: "SICHERHEITSKONZEPTE FUER OELHYDRAULISCHE HUBWERKE. ÖTEIL I: KONVENTIONELLE SICHERUNGSMECHANISMEN GEGEN UNBEABSICHTIGTES ABSINKEN UND IHRE THEORETISCHE BEWERTUNG", O + P OLHYDRAULIK UND PNEUMATIK, VEREINIGTE FACHVERLAGE, MAINZ, DE, Bd. 40, Nr. 1, 1. Januar 1996 (1996-01-01) , Seiten 57-62, XP000195395, ISSN: 0341-2660

## Beschreibung

Die vorliegende Erfindung betrifft eine Klemmeinheit gemäß dem Oberbegriff des Patentanspruchs 1 für ein zu klemmendes Bauteil, insbesondere eine Stange, mit einem an dem zu klemmendem Bauteil angeordneten inneren Klemmelement, welches insbesondere als Außenkonus ausgebildet ist, und mit einem koaxial zu dem inneren Klemmelement angeordneten und mit dem inneren Klemmelement selektiv klemmend zusammenwirkenden äußeren Klemmelement, welches zumindest abschnittsweise insbesondere als zu dem Außenkonus komplementärer Innenkonus ausgebildet ist, wobei das äußere Klemmelement zum Klemmen des Bauteils relativ zu dem inneren Klemmelement axial verschiebbar ist, und wobei zusätzlich zu dem äußeren Klemmelement wenigstens ein Kolbenelement vorgesehen ist, welches in axialer Richtung relativ zu dem äußeren Klemmelement beweglich ist.

Derartige Klemmeinheiten, welche vorzugsweise nach dem Prinzip der Selbstverstärkung ihrer Klemmwirkung unter Lasteinfluss arbeiten, werden regelmäßig als so genannte Formschließeinheiten eingesetzt, beispielsweise bei Kunststoffmaschinen.

Aus der WO 0067987 A1 ist eine gattungsgemäße Vorrichtung bekannt, bei der zusätzlich zu zwei komplementär-konusförmig ausgebildeten Klemmelemente ein Kolbenelement vorgesehen ist, welches dazu dient, in Löserichtung der Klemmeinheit insbesondere auf das innere Klemmelement einzuwirken.

Bei herkömmlichen Formschließeinheiten (oder auch: Formschließköpfen) wird durch ein Kolbenteil, welches auf das äußere Klemmelement einwirkt oder welches selbst als das äußere Klemmelement fungieren kann, über den Konuswinkel des Außen- und Innenkonus eine Normalkraft auf das innere Klemmelement und damit auf das zu klemmende Bauteil bzw. die Stange erzeugt. Gleichzeitig wirkt die Kolbenkraft als Axialschließkraft des Formschließkopfes, beispielsweise um eine Formeinheit der erwähnten Kunststoffmaschine zu schließen. Das Kolbenteil muss hinsichtlich Kolbenfläche bzw. auf es wirkender Druckbeaufschlagung so bemessen und ausgebildet sein, dass es in der Lage ist, eine geforderte Axialschließkraft zu erzeugen.

Allerdings erzeugt die Axialschließkraft (oder kurz: Axialkraft) über den Konuswinkel zwangsläufig auch eine Normalkraft, welche senkrecht zur Stangenoberfläche auf das innere Klemmelement und die Stange selbst einwirkt. Diese Normalkraft liegt in der Regel deutlich überhalb derjenigen, die zur Übertragung der Axialkraft auf die Formeinheit mittels des zu klemmenden bzw. geklemmten Bauteils erforderlich wäre. Es resultiert eine relativ hohe Flächenpressung des zu klemmenden Bauteils sowie des inneren Klemmelements und insbesondere auch eines Gleitbelags, welcher regelmäßig zwischen dem inneren Klemmelement und dem zu klemmenden Bauteil angeordnet ist. Dies wirkt sich negativ auf die Lebensdauer der gesamten Klemmeinheit aus.

Eine Abhilfemöglichkeit besteht in einer Vergrößerung der entsprechenden Flächen, um so die Kraft pro Flächeneinheit zu reduzieren, was sich jedoch negativ auf die Größe der Klemmeinheit auswirkt. Eine andere Abhilfemöglichkeit besteht in der Vergrößerung des Konuswinkels, was allerdings zu Lasten der gewünschten selbstverstärkenden Klemmwirkung gehen würde.

Der Erfindung liegt die Aufgabe zugrunde, eine Klemmeinheit der eingangs genannten Art dahingehend weiterzuentwickeln, dass eine Steigerung der Axialschließkraft gegenüber herkömmlichen Klemmeinheiten ermöglicht wird, ohne dass es zu einer Erhöhung der genannten Flächenpressungen kommt und ohne dass die Klemmeinheit insgesamt größer und/oder mit vergrößertem Konuswinkel gebaut werden müsste.

Die Erfindung löst diese Aufgabe mittels einer Klemmeinheit mit den Merkmalen des beigefügten Patentanspruchs 1. Vorteilhafte Weiterbildungen der Erfindung sind Gegenstand von Unteransprüchen, deren Wortlaut hiermit durch ausdrückliche Bezugnahme in die Beschreibung aufgenommen wird, um Textwiederholungen zu vermeiden.

Erfindungsgemäß ist eine Klemmeinheit für ein zu klemmendes Bauteil, insbesondere Stange, mit einem an dem zu klemmenden Bauteil angeordneten inneren Klemmelement, welches insbesondere als Außenkonus ausgebildet ist, und mit einem koaxial zu dem inneren Klemmelement angeordneten und mit dem inneren Klemmelement selektiv klemmend zusammenwirkenden äußeren Klemmelement, welches zumindest abschnittweise insbesondere als zu dem Außenkonus komplementärer Innenkonus ausgebildet ist, wobei das äußere Klemmelement zum Klemmen des Bauteils relativ zu dem inneren Klemmelement axial verschiebbar ist, **dadurch gekennzeichnet, dass** zusätzlich zu dem äußeren Klemmelement wenigstens ein Kolbenelement vorgesehen ist, welches in axialer Richtung relativ zu dem äußeren Klemmelement beweglich ist, wobei das Kolbenelement zum Übertragen eines ersten Teils einer Axialschließkraft auf das zu klemmende Bauteil in der Schließrichtung im Wesentlichen nur axial auf das innere Klemmelement einwirkt, während das äußere Klemmelement zum Übertragen eines zweiten Teils der Axialschließkraft auf das zu klemmende Bauteil in der Schließrichtung axial und normal auf das innere Klemmelement einwirkt.

Der Kerngedanke der vorliegenden Erfindung beruht auf folgender Überlegung: Anstelle des aus dem Stand der Technik bekannten einteiligen Kolbenteils bzw. äußeren Klemmelements wird eine wenigstens zweiteilige Ausgestaltung des Kolbenteils vorgeschlagen, wobei die beiden Einzelteile (vorliegend als äußeres Klemmelement bzw. als Kolbenelement bezeichnet) vorzugsweise über wenigstens eine Dichtung verbunden und entsprechend axial relativ zueinander verschiebbar sind. Dadurch wird ermöglicht, dass nur ein Teil des Kolbens, nämlich das äußere Klemmelement, eine Axialkraft bewirkt, die über den Konuswinkel wiederum eine Normalkraft hervorruft. Der andere Teil des Kolbens, nämlich das Kolbenelement, wirkt direkt und im Wesentlichen nur auf das innere Klemmelement und erzeugt somit keine (unerwünschte) Normalkraft, sondern bewirkt nur die (erwünschte) zusätzliche Axialkraft.

Im Rahmen der vorliegenden Beschreibung wird im Folgenden das erstgenannte Teil als "äußere Klemmelement" und das als zweites genannte Teil als das "Kolbenelement" bezeichnet, wie bereits erwähnt.

Bei geeigneter Flächenaufteilung hinsichtlich des Flächenverhältnisses der zum Klemmen druckbeaufschlagten Flächen des Kolbenelements bzw. des äußeren Klemmelements kann im Rahmen der vorliegenden Erfindung bei gleicher Axialkraft wie bei einem herkömmlichen Formschließkopf die Flächenpressung von Gleitbelag und/oder zu klemmende Bauteil und/oder innerem Klemmelement um etwa 25 bis 30 % reduziert werden. Dieser Umstand ermöglicht eine größenmäßig kleinere Ausgestaltung dieser Flächen, wodurch wiederum der gesamte Formschließkopf kleiner, insbesondere kürzer gebaut werden kann. Besonders große Axialkräfte an bestimmten zu klemmenden Bauteilen, wie Stangen eines bestimmten Durchmessers, sind durch die erfindungsgemäße Zweiteilung des Kolbenteils überhaupt erst sinnvoll realisierbar.

Eine bevorzugte Weiterbildung des erfindungsgemäßen Klemmelements sieht vor, dass das Kolbenelement und das äußere Klemmelement zum Klemmen des Bauteils gemeinsam mit Druck beaufschlagbar sind. Vorzugsweise ist zu diesem Zweck wenigstens ein Durchbruch in einem Gehäuseteil der Klemmeinheit vorgesehen, über welchen das Kolbenelement und das äußere Klemmelement gemeinsam beaufschlagt werden.

Im Rahmen einer alternativen Ausgestaltung der erfindungsgemäßen Klemmeinheit kann dagegen vorgesehen sein, dass das Kolbenelement und das äußere Klemmelement zum Klemmen des Bauteils separat mit Druck beaufschlagt werden, in welchem Zusammenhang vorzugsweise wenigstens zwei getrennte Gehäusedurchbrüche zur separaten Druckbeaufschlagung der genannten Bauteile vorgesehen sind.

Weitere Eigenschaften und Vorteile der vorliegenden Erfindung ergeben sich aus der nachfolgenden Beschreibung eines Ausführungsbeispiels anhand der Zeichnung.

Figur 1 zeigt einen teilweisen Längsschnitt durch eine erste Ausgestaltung der erfindungsgemäßen Klemmeinheit; und

Figur 2 zeigt einen teilweisen Längsschnitt durch eine zweite Ausgestaltung der erfindungsgemäßen Klemmeinheit; und

Die Klemmeinheit, welche in den Figuren als Ganzes mit dem Bezugszeichen 1 bezeichnet ist, dient zum Klemmen eines Bauteils 2 in Form einer Stange, welche in den Figuren jeweils nur teilweise dargestellt ist. Insbesondere ist die Klemmeinheit 1 nach Art eines Formschließkopfes beispielsweise zum Schließen einer Spritzgießform oder dergleichen einsetzbar. Die dargestellte Klemmeinheit ist vom selbstverstärkenden Typ, wobei der Pfeil S die Schließrichtung und der Pfeil L die Lastrichtung angibt.

Die Klemmeinheit 1 umfasst neben einem inneren Klemmelement 3, einem äußeren Klemmelement 4 und dem Kolbenelement 4', worauf weiter unten noch detailliert eingegangen wird, zunächst ein mehrteiliges Gehäuse 5, von dem vorliegend ein erstes Gehäuseteil 5a und ein zweites Gehäuseteil 5b explizit dargestellt sind. Ein weiterer Bestandteil der dargestellten Klemmeinheit 1 ist ein die Stange 2 umgebendes Hülsenteil 6, welches als Widerlager für ein Tellerfederpaket 7 dient, welches innerhalb des Hülsenteils 6 und dabei zwischen diesem und dem inneren Klemmelement 3 angeordnet ist.

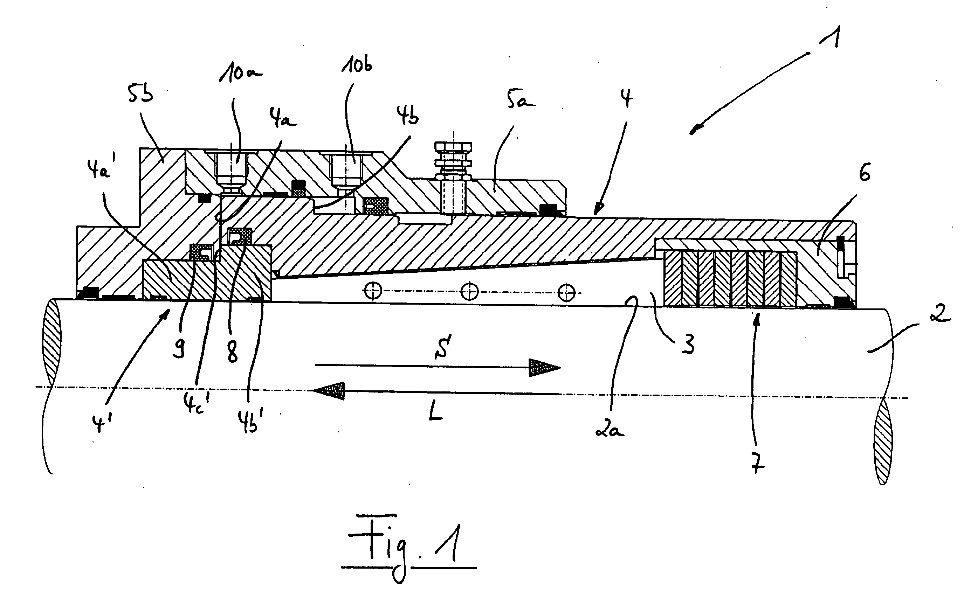

Das äußere Klemmelement 4 gemäß der Ausgestaltung in Figur 1 im Wesentlichen nach Art eines Innenkonus ausgebildet ist, welcher das als Außenkonus ausgebildete innere Klemmelement 3 umgibt. Das axial neben dem inneren Klemmelement 3 angeordnete Kolbenelement 4' besitzt im Wesentlichen eine L-Form und ist mit seinem einen Schenkel 4a' in einer Ausnehmung des Gehäuseteils 5b und mit seinem anderen Schenkel 4b' in einer Ausnehmung des äußeren Klemmelements 4 angeordnet.

Der in dem äußeren Klemmelement 4 aufgenommene Schenkel 4a' des Kolbenelements 4' und die äußere Stirnfläche des äußeren Klemmelements 4 fluchten unter Ausbildung von Druckflächen 4a, 4c', wobei die Flächengrößen oder Flächeninhalte der Druckflächen 4a, 4c' in einem vorbestimmten Verhältnis zueinander stehen, worauf weiter unten noch genauer eingegangen wird.

Zwischen dem äußeren Klemmelement 4 und dem Kolbenelement 4' ist im Bereich der genannten Ausnehmung des äußeren Klemmelements 4 ein Dichtmittel 8 angeordnet. Ein weiteres Dichtmittel 9 findet sich zwischen dem Kolbenelement 4' und dem Gehäuseteil 5b im Bereich der dortigen Ausnehmung. Das äußere Klemmelement 4 und das Kolbenelement 4' sind somit in axialer Richtung der Klemmeinheit 1, das heißt in Richtung des Pfeils S und/oder in Richtung des Pfeils L relativ zueinander beweglich. Das Gleiche gilt zumindest auch für das äußere Klemmelement 4 und das innere Klemmelement 3.

In dem Gehäuseteil 5a sind zwei Durchbrüche 10a, 10b vorgesehen, um das äußere Klemmelement 4 zum Betätigen der Klemmeinheit 1 mit einem Druckmedium, wie einem Hydrauliköl oder dergleichen, beaufschlagen zu können. Der erste Durchbruch 10a ist etwa im Stoßbereich des äußeren Klemmelements 4 und des Gehäuseteils 5b angeordnet und dient zum Beaufschlagen der weiter oben bereits erwähnten Druckflächen 4c bzw. 4c'. Der zweite Durchbruch 10b ist im Bereich einer äußeren Schulter 4b des äußeren Klemmelements 4 angeordnet und dient entsprechend zum Beaufschlagen des äußeren Klemmelements 4 in diesem Bereich.

Um beispielsweise eine nicht gezeigte Formeinheit mittels der dargestellten Klemmeinheit zu verschließen, wird mittels des äußeren Klemmelements 4 und des inneren Klemmelements 3 auf die Stange 2 und mittels dieser in Schließrichtung S über die Axialschließkraft auf die genannte Formeinheit eingewirkt. Dabei kommt es insbesondere aufgrund des Tellerfederpakets 7 zu einer relativen Bewegung zwischen dem äußeren Klemmelement 4 und dem inneren Klemmelement 3, wodurch über den Konuswinkel insbesondere eine Normalkraft auf das innere Klemmelement 3 und über dieses auf die Stange 2 wirkt, um Letztere zu klemmen und die genannte Axialschließkraft zu übertragen.

Wie der Fachmann erkennt, ist es zum Bewirken der vorstehend erläuterten Abläufe erforderlich, das äußere Klemmelement 4 über den Durchbruch 10a mit einem geeigneten Druck zu beaufschlagen. Dieser Druck bewirkt einerseits eine Axialschließkraft in Richtung des Pfeils S sowie über den Konuswinkel eine Normalkraft auf die Stange 2, um diese zu klemmen und die Axialschließkraft zu übertragen.

Es würde nun bei herkömmlichen Klemmeinheiten das Problem auftreten, dass die zur Vermittlung der Axialschließkraft erforderliche Normalkraft zum Klemmen der Stange 2 aufgrund des zur Selbstverstärkung erforderlichen relativ geringen Konuswinkels regelmäßig übertroffen wird, was sich unter anderem negativ auf die Lebensdauer des insbesondere radial zusammengepressten inneren Klemmelements 3 und der Stange 2 und eines regelmäßig zwischen innerem Klemmelement 3 und Stange 2 angeordneten Gleitbelags (nicht gezeigt) auswirkt.

Um dieses Problem zu umgehen, ist zusätzlich zu dem äußeren Klemmelement 4 das Kolbenelement 4' vorgesehen, wie weiter oben detailliert beschrieben. Die Druckbeaufschlagung über den Durchbruch 10a wirkt somit einerseits auf die Druckfläche 4a des äußeren Klemmelements 4 und bewirkt unter anderem die angesprochene Normalkraft auf das innere Klemmelement 3 bzw. die Stange 2 zur Vermittlung eines Teils der benötigten Axialschließkraft. Das Kolbenelement 4', welches im Bereich seiner Druckfläche 4c' ebenfalls über den Durchbruch 10a beaufschlagt wird, bewirkt dagegen keine Normalkraft, da es mit der Außenseite des Schenkels 4b' direkt in Axialrichtung auf das daneben angeordnete innere Klemmelement 3 einwirkt.

Wenn man die relative Größe der Druckflächen 4a, 4c' geeignet wählt, kann so bei gleicher Gesamt-Axialkraft verglichen mit einer herkömmlichen Klemmeinheit die Flächenpressung des genannten Gleitbelags bzw. der Stange 2 und unter des inneren Klemmelements 3 um etwa 20 bis 25 % reduziert werden. Dies wirkt sich zum einen vorteilhaft auf die Lebensdauer der gesamten Klemmeinheit 1 aus, andererseits können Klemmeinheiten bezogen auf die Abmessung der Kontaktflächen von innerem Klemmelement 3, Stange 2 und Gleitbelag entsprechend kürzer gebaut werden. Weiterhin lassen sich durch die beschriebene Zweiteilung des herkömmlicherweise einteiligen Kolbenteils in das äußere Klemmelement 4 und das Kolbenelement 4' in einfacher und sinnvoller Weise relativ große Axialkräfte an bestimmten Stangendurchmessern realisieren.

Zum Lösen der Klemmeinheit 1 wird - wie der Fachmann erkennt - entsprechend Druckmedium über den Durchbruch 10b zugeführt, welches in Richtung des Pfeils L auf die äußere Schulter 4b des äußeren Klemmelements 4 wirkt.

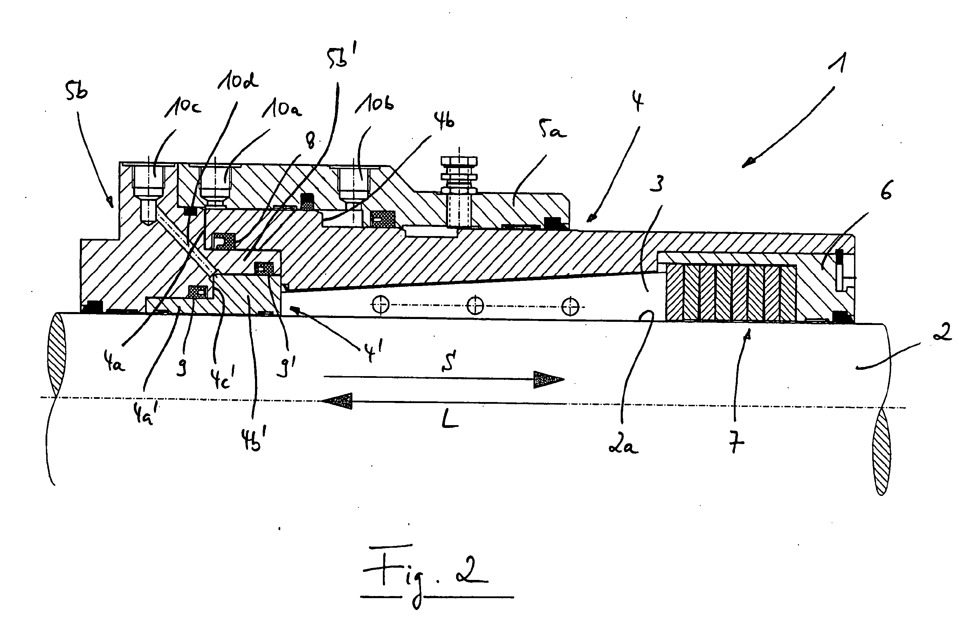

Die in Figur 2 dargestellte Ausgestaltung der erfindungsgemäßen Klemmeinheit 1 unterscheidet sich nur geringfügig von der Ausgestaltung gemäß Figur 1, so dass vorliegend nur auf die wesentlichen Unterschiede zwischen den beiden Ausführungsformen einzugehen ist.

Die Klemmeinheit 1 gemäß Figur 2 weist im Bereich des Gehäuseteils 5b noch einen weiteren Durchbruch 10c einschließlich eines vorliegend schräg durch das Gehäuseteil 5b verlaufenden Druckbeaufschlagungskanals 10d auf, über welchen das Kolbenelement 4' separat von dem äußeren Klemmelement 4 mit Druck beaufschlagbar ist, auf diese Weise eine getrennte Steuerbarkeit der Bewegungen bzw. der übertragenen Kräfte des äußeren Klemmelements 4 und des Kolbenelements 4' zu erreichen.

In diesem Zusammenhang erstreckt sich ein Gehäuseteilabschnitt 5b' des Gehäuseteils 5b in den Bereich der Ausnehmung des äußeren Klemmelements 4 und trennt das äußere Klemmelement 4 und das Kolbenelement 4' in radialer Richtung. Das bereits erwähnte Dichtmittel 8 ist gemäß der Ausgestaltung in Figur 2 zwischen dem äußeren Klemmelement 4 und dem genannten Gehäuseteilabschnitt 5b' angeordnet. Zusätzlich zu dem ebenfalls bereits erwähnten Dichtmittel 9 zwischen dem Gehäuseteil 5b und dem Kolbenelement 4' weist die Klemmeinheit 1 noch ein weiteres Dichtmittel 9' auf, welches zwischen dem Gehäuseteilabschnitt 5b' und dem Kolbenelement 4' angeordnet ist. Dabei befindet sich das Dichtmittel 9' bezogen auf das Dichtmittel 9 auf der anderen Seite des Druckbeaufschlagungskanals 10d.

Wie bereits erwähnt, ermöglicht die Ausgestaltung gemäß Figur 2 eine getrennt steuerbare Druckbeaufschlagung des äußeren Klemmelements und des Kolbenelements und damit eine gezielt anwendungsspezifisch und dynamisch einstellbare Axialschließkraft.

## Patentansprüche

1. Klemmeinheit (1) für ein zu klemmendes Bauteil (2), insbesondere Stange, mit einem an dem zu klemmenden Bauteil angeordneten inneren Klemmelement (3), welches insbesondere als Außenkonus ausgebildet ist, und mit einem koaxial zu dem inneren Klemmelement angeordneten und mit dem inneren Klemmelement selektiv klemmend zusammenwirkenden äußeren Klemmelement (4), welches zumindest abschnittweise insbesondere als zu dem Außenkonus komplementärer Innenkonus ausgebildet ist, wobei das äußere Klemmelement zum Klemmen des Bauteils relativ zu dem inneren Klemmelement axial verschiebbar ist, und wobei zusätzlich zu dem äußeren Klemmelement (4) wenigstens ein Kolbenelement (4') vorgesehen ist, welches in axialer Richtung relativ zu dem äußeren Klemmelement (4) beweglich ist,
**dadurch gekennzeichnet, dass**
das Kolbenelement (4') zum Übertragen eines ersten Teils einer Axialschließkraft auf das zu klemmende Bauteil (2) in der Schließrichtung (S) im Wesentlichen nur axial auf das innere Klemmelement (3) einwirkt, während das äußere Klemmelement (4) zum Übertragen eines zweiten Teils der Axialschließkraft auf das zu klemmende Bauteil (2) in der Schließrichtung (S) axial und normal auf das innere Klemmelement (3) einwirkt.

2. Klemmeinheit (1) nach Anspruch 1, **dadurch gekennzeichnet, dass** das äußere Klemmelement (4) das innere Klemmelement (3) im Wesentlichen umgibt, während das Kolbenelement (4') in axialer Richtung im Wesentlichen neben dem inneren Klemmelement (3) angeordnet ist.

3. Klemmeinheit (1) nach Anspruch 1 oder 2, **dadurch gekennzeichnet, dass** zwischen dem äußeren Klemmelement (4) und dem Kolbenelement (4') wenigstens ein Dichtmittel (8) angeordnet ist.

4. Klemmeinheit (1) nach mindestens einem der Ansprüche 1 bis 3, **dadurch gekennzeichnet, dass** zwischen dem Kolbenelement (4') und dem äußeren Klemmelement (4) wenigstens ein Gehäuseteilabschnitt (5b') eines Gehäuseteils (5b) der Klemmeinheit angeordnet ist, wobei zwischen dem Gehäuseteilabschnitt und dem Kolbenelement sowie zwischen dem Gehäuseteilabschnitt und dem äußeren Klemmelement jeweils wenigstens ein Dichtmittel (9, 9'; 8) angeordnet ist.

5. Klemmeinheit (1) nach mindestens einem der Ansprüche 1 bis 4, **dadurch gekennzeichnet, dass** das Kolbenelement (4') und das äußere Klemmelement (4) zum Klemmen des Bauteils (2) gemeinsam mit Druck beaufschlagbar sind.

6. Klemmeinheit (1) nach mindestens einem der Ansprüche 1 bis 4, **dadurch gekennzeichnet, dass** das Kolbenelement (4') und das äußere Klemmelement (4) zum Klemmen des Bauteils (2) separat mit Druck beaufschlagbar sind.

7. Klemmeinheit (1) nach mindestens einem der Ansprüche 1 bis 6, **dadurch gekennzeichnet, dass** das Verhältnis der mit Druck beaufschlagbaren Flächen (4a, 4c') des Kolbenelements (4') und des äußeren Klemmelements (4) entsprechend dem gewünschten Verhältnis von auf das innere Klemmelement (3) wirkender Axial- und Normalkraft gewählt ist.

8. Klemmeinheit (1) nach mindestens einem der Ansprüche 1 bis 7, **dadurch gekennzeichnet, dass** das äußere Klemmelement (4) eine radial innen liegende Ausnehmung aufweist, in welcher das Kolbenelement (4') zumindest teilweise aufgenommen ist.

9. Klemmeinheit (1) nach Anspruch 8, **dadurch gekennzeichnet, dass** das Dichtmittel (8; 9') gemäß Anspruch 3 oder 4 in dem Bereich der Ausnehmung angeordnet ist.

## Claims

1. Clamping unit (1) for a component (2) to be clamped, especially a rod, having an inner clamping element (3) arranged on the component to be clamped, which inner clamping element is especially in the form of an external cone, and having an outer clamping element (4) arranged coaxially with respect to the inner clamping element and co-operating with the inner clamping element to effect a selective clamping action, which outer clamping element, at least in some regions, is especially in the form of an internal cone complementary to the external cone, the outer clamping element being displaceable axially relative to the inner clamping element to clamp the component, and there being provided in addition to the outer clamping element (4) at least one piston element (4') which is movable in the axial direction relative to the outer clamping element (4),
**characterised in that**
the piston element (4'), to transfer a first portion of an axial closing force to the component (2) to be clamped, acts on the inner clamping element (3) substantially only axially in the closing direction (S), while the outer clamping element (4), to transfer a second portion of the axial closing force to the component (2) to be clamped, acts on the inner clamping element (3) axially and normally in the closing direction (S).

2. Clamping unit (1) according to claim 1, **characterised in that** the outer clamping element (4) substantially surrounds the inner clamping element (3), while the piston element (4') is arranged substantially next to the inner clamping element (3) in the axial direction.

3. Clamping unit (1) according to claim 1 or 2, **characterised in that** at least one sealing means (8) is arranged between the outer clamping element (4) and the piston element (4').

4. Clamping unit (1) according to at least one of claims 1 to 3, **characterised in that** at least one housing sub-region (5b') of a housing part (5b) of the clamping unit is arranged between the piston element (4') and the outer clamping element (4), at least one sealing means (9, 9'; 8) being arranged between the housing sub-region and the piston element and between the housing sub-region and the outer clamping element.

5. Clamping unit (1) according to at least one of claims 1 to 4, **characterised in that** the piston element (4') and the outer clamping element (4) can be acted upon by pressure jointly to clamp the component (2).

6. Clamping unit (1) according to at least one of claims 1 to 4, **characterised in that** the piston element (4') and the outer clamping element (4) can be acted upon by pressure separately to clamp the component (2).

7. Clamping unit (1) according to at least one of claims 1 to 6, **characterised in that** the ratio of the areas (4a, 4c') of the piston element (4') and of the outer clamping element (4) that are arranged to be acted upon by pressure is selected in accordance with the desired ratio of axial and normal forces acting on the inner clamping element (3).

8. Clamping unit (1) according to at least one of claims 1 to 7, **characterised in that** the outer clamping element (4) has a radially inwardly located recess in which the piston element (4') is at least partly received.

9. Clamping unit (1) according to claim 8, **characterised in that** the sealing means (8; 9') according to claim 3 or 4 is arranged in the region of the recess.

## Revendications

1. Unité de serrage (1) pour une pièce (2) à serrer, notamment une tige, avec un élément de serrage intérieur (3) disposé contre la pièce à serrer et réalisé notamment sous forme de cône extérieur, et avec un élément de serrage extérieur (4) disposé coaxialement à l'élément de serrage intérieur, coopérant en serrage de manière sélective avec l'élément de serrage intérieur et réalisé notamment, au moins pour partie, sous forme de cône intérieur complémentaire du cône extérieur, sachant que l'élément de serrage extérieur peut être déplacé axialement par rapport à l'élément de serrage intérieur pour serrer la pièce, et sachant qu'il est prévu en plus de l'élément de serrage extérieur (4) au moins un élément du genre piston (4'), qui est mobile en direction axiale par rapport à l'élément de serrage extérieur (4),
**caractérisée en ce qu'**afin de transmettre une première partie d'une force de fermeture axiale dans la direction de fermeture (S) sur la pièce (2) à serrer, l'élément du genre piston (4') agit pour l'essentiel uniquement axialement sur l'élément de serrage intérieur (3), tandis qu'afin de transmettre une deuxième partie de la force de fermeture axiale dans la direction de fermeture (S) sur la pièce (2) à serrer, l'élément de serrage extérieur (4) agit en direction axiale et en direction normale sur l'élément de serrage intérieur (3).

2. Unité de serrage (1) selon la revendication 1, **caractérisée en ce que** l'élément de serrage extérieur (4) entoure pour l'essentiel l'élément de serrage intérieur (3), tandis que l'élément du genre piston (4') est disposé pour l'essentiel à côté de l'élément de serrage intérieur (3) en direction axiale.

3. Unité de serrage (1) selon la revendication 1 ou 2, **caractérisée en ce qu'**au moins un moyen d'étanchéité (8) est disposé entre l'élément de serrage extérieur (4) et l'élément du genre piston (4').

4. Unité de serrage (1) selon au moins une des revendications 1 à 3, **caractérisée en ce qu'**au moins un tronçon de partie de boîtier (5b') d'une partie de boîtier (5b) de l'unité de serrage est disposé entre l'élément du genre piston (4') et l'élément de serrage extérieur (4), sachant qu'au moins un moyen d'étanchéité respectif (9, 9' ; 8) est disposé entre le tronçon de partie de boîtier et l'élément du genre piston ainsi qu'entre le tronçon de partie de boîtier et l'élément de serrage extérieur.

5. Unité de serrage (1) selon au moins une des revendications 1 à 4, **caractérisée en ce que** l'élément du genre piston (4') et l'élément de serrage extérieur (4) peuvent être conjointement sollicités en pression pour serrer la pièce (2).

6. Unité de serrage (1) selon au moins une des revendications 1 à 4, **caractérisée en ce que** l'élément du genre piston (4') et l'élément de serrage extérieur (4) peuvent être séparément sollicités en pression pour serrer la pièce (2).

7. Unité de serrage (1) selon au moins une des revendications 1 à 6, **caractérisée en ce que** le rapport des surfaces (4a, 4c') de l'élément du genre piston (4') et de l'élément de serrage extérieur (4) qui peuvent être sollicitées en pression est choisi conformément au rapport souhaité de la force axiale et de la force normale agissant sur l'élément de serrage intérieur (3).

8. Unité de serrage (1) selon au moins une des revendications 1 à 7, **caractérisée en ce que** l'élément de serrage extérieur (4) présente un évidement situé radialement à l'intérieur, dans lequel l'élément du genre piston (4') est au moins partiellement reçu.

9. Unité de serrage (1) selon la revendication 8, **caractérisée en ce que** le moyen d'étanchéité (8 ; 9') selon la revendication 3 ou 4 est disposé dans la région de l'évidement.
